# EUROPEAN PATENT APPLICATION

(11) **EP 4 513 727 A2**
(43) Date of publication of application: **26.02.2025**
(21) Application number: 24196032.7
(22) Date of filing: 22.08.2024
(51) Int. Cl.: H02K 41/02

(54) **LINEAR ELECTRIC MOTOR**

(30) Priority: 24.08.2023 US 202363578473 P
(71) Applicant: Illinois Tool Works Inc., Glenview IL 60025 (US)
(72) Inventor: FUREY, Chad, Glenview, 60025 (US); REINER, Andrew, Glenview, 60025 (US); KOHRING, Henry, Glenview, 60025 (US); CAMPBELL, Craig, Glenview, 60025 (US); KUHLMANN, Tyler, Glenview, 60025 (US)
(74) Representative: HGF

(57) **Abstract**

A linear electric motor includes a stator having a plurality of stacked stator segments, wherein at least one of the plurality of stacked stator segment comprises a stator portion, a first stator back portion adjacent the stator portion on a first face of the stator portion, and a conductor. An armature is configured to travel linearly through the stator during operation. The conductor substantially encircles the armature portion.

## Description

### CROSS-REFERENCE TO RELATED APPLICATION

This application claims the benefit of priority from U.S. Provisional Patent Application No. 63/520,534 filed August 24, 2023 for "LINEAR ELECTRIC MOTOR," the content of which is hereby incorporated by reference in its entirety.

### BACKGROUND

The discussion below is merely provided for general background information and is not intended to be used as an aid in the scope of the subject matter.

Aspects herein disclosed relate to actuators and particularly to a construction of an electromagnetic actuator that applies a linear force. A particular advantageous use of such an actuator is in a test machine or apparatus used to test parameters and/or performance of materials, components, consumer products as well as medical and other devices (i.e. test specimens). Typically, test machines include one or more actuators to apply input loads and displacement.

### SUMMARY

In one embodiment, a linear electric motor includes a stator having a plurality of stacked stator segments, wherein at least one of the plurality of stacked stator segment comprises a stator portion, a first stator back portion adjacent the stator portion on a first face of the stator portion, and a conductor. An armature is configured to travel linearly through the stator during operation. The conductor substantially encircles the armature.

In one embodiment, the linear electric motor further includes at least one stator portion including a plurality of laminations. In an embodiment, the at least one stator back portion includes a plurality of laminations. The linear electric motor in en embodiment further includes a plurality of stator teeth. The stator portion includes a plurality of stator tooth slots extending from a center opening radially toward an outer circumference of the stator portion. Each stator tooth is configured to slot into a respective one of the plurality of stator tooth slot. In an embodiment, at least one of the plurality of stator teeth comprises a plurality of laminations. In an embodiment, a housing encloses the stator and the armature.

In an embodiment, each stator tooth may include a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension. Each stator tooth is orientable in one of two positions in its respective stator tooth slot, a first position in which the first extension extends in a first direction perpendicular to a first face of the stator portion, and a second position in which the first extension extends in a second direction opposite the first direction and perpendicular to a second face of the stator portion opposite and parallel to the first face. In an embodiment, the stator teeth are arranged in a pattern having an equal number of stator teeth in the first position and in the second position.

In an embodiment, each stacked stator segment further comprises portion a second back portion adjacent the stator portion on a second face of the stator portion opposite the first face. Each stator tooth may include a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension. At least one stator portion includes in an embodiment a plurality of laminations, wherein at least one back portion comprises a plurality of laminations, and wherein at least one stator tooth of the plurality of stator teeth comprises a plurality of laminations, a direction of laminations of each stator tooth perpendicular to a direction of laminations of the stator portion and back portions.

Generally, a stator for a linear electric motor includes a plurality of stacked stator segments. Each stator segment includes a stator portion, a back portion adjacent to a first face of the stator portion, and a conductor adjacent to the back portion.

In an embodiment, at least one stator portion comprises a plurality of laminations. In an embodiment, at least one stator back portion comprises a plurality of laminations. In an embodiment, at least one stator segment further comprises a plurality of stator teeth. The at least one stator portion may include a plurality of stator tooth slots extending from a center opening radially toward an outer circumference of the stator portion, and wherein each stator tooth is configured to slot into a respective one of the plurality of stator tooth slots. At least one of the plurality of stator teeth may include a plurality of laminations. Each stator tooth may include a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension. Each stator tooth is orientable in one of two positions in its respective stator tooth slot, a first position in which the first extension extends in a first direction perpendicular to the first face of the stator portion, and a second position in which the first extension extends in a second direction opposite the first direction and perpendicular to a second face of the stator portion opposite and parallel to the first face. In an embodiment, the stator portion comprises at least two slots, and the stator teeth are arranged in a pattern having an equal number of stator teeth in the first position and in the second position.

In an embodiment, at least one stacked stator segment further comprises a second back portion adjacent the second face of the stator portion. The stator may further comprise a plurality of stator teeth engaged in radial slots of the stator portion, wherein each stator tooth comprises a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension. The at least one stator portion may comprise a plurality of laminations, wherein at least one back portion comprises a plurality of laminations, and wherein at least one stator tooth of the plurality of stator teeth comprises a plurality of laminations, a direction of laminations of each laminated stator tooth perpendicular to a direction of laminations of the laminated stator portion and laminated back portion.

In an embodiment, the back portion includes an aperture of size to receive an armature. The conductor in one embodiment substantially encircles the aperture.

Generally, a method of assembling a stator for a linear electric motor includes assembling a plurality of stator segments, each stator segment comprising a stator portion, a back portion adjacent a first face of the stator portion, and a conductor; and stacking the plurality of stator segments to create the stator.

In one embodiment, assembling further comprises inserting a plurality of stator teeth into a plurality of stator tooth slots in at least one stator portion, the stator tooth slots extending from a center opening of the stator portion radially toward an outer circumference of the stator portion. Each stator tooth is configured to slot into a respective one of the plurality of stator tooth slots, and wherein each stator tooth comprises a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension. The method comprises, in on embodiment orienting each stator tooth in one of two positions in its respective stator tooth slot, a first position in which the first extension extends in a first direction perpendicular to the first face of the stator portion, and a second position in which the first extension extends in a second direction opposite the first direction and perpendicular to a second face of the stator portion opposite and parallel to the first face. Inserting the stator teeth comprises in an embodiment arranging the inserted stator teeth in a pattern having an equal number of stator teeth in the first position and in the second position.

The method further comprises in an embodiment each stacked stator segment further comprising a second back portion adjacent the second face of the stator portion.

A method of assembling a linear electric motor includes stacking a plurality of stator segments together to form a stator, and stacking a plurality of armature segments together to form an armature. Each stator segment includes a stator portion, a back portion adjacent the stator portion, and a conductor, wherein the conductor substantially encircles the armature. Windings of the conductors of each of the plurality of stator segments are connected.

In one embodiment, stacking a plurality of stator segments together further comprises stacking laminated stator portions. In an embodiment, the method further comprises mounting the stator and the armature in a housing.

This summary is not intended to describe each disclosed embodiment or every implementation of linear electric motors as described herein. Many other novel advantages, features, and relationships will become apparent as this description proceeds. The FIG. s and the description that follow more particularly exemplify illustrative embodiments.

### BRIEF DESCRIPTION OF THE DRAWINGS

FIG. 1 is a perspective view of a linear electric motor according to an embodiment of the present disclosure;
FIG. 2 is a perspective view of a stator segment according to an embodiment of the present disclosure;
FIG. 3 is an exploded view of the stator segment of FIG. 2;
FIG. 4 is a perspective view of a stator portion according to an embodiment of the present disclosure;
FIG. 5 is a perspective view of a stator back portion according to an embodiment of the present disclosure;
FIG. 6 is a perspective view of a stator tooth according to an embodiment of the present disclosure;
FIG. 7 is a perspective view of a representative housing according to an embodiment of the present disclosure;
FIG. 8 is a perspective view of a stacked stator according to an embodiment of the present disclosure;
FIG. 9 is a perspective view of a stator portion and stator teeth according to an embodiment of the present disclosure;
FIG. 10 is a side view of laminations of a stator portion according to an embodiment of the present disclosure;
FIG. 11 is a side view of laminations of a stator back portion according to an embodiment of the present disclosure;
FIG. 12 is a side view of laminations of a stator tooth according to an embodiment of the present disclosure;
FIG. 13 is a flow chart diagram of a method according to an embodiment of the present disclosure;
FIG. 14 is a flow chart diagram of a method according to another embodiment of the present disclosure;
FIG. 15 is a more detailed view of an armature according to an embodiment of the present disclosure;
FIG. 16 is a perspective view of a magnet in a first position; and
FIG. 17 is a perspective view of a magnet in a second position.

### DETAILED DESCRIPTION OF ILLUSTRATIVE EMBODIMENTS

It should be noted that the same reference numerals are used in different Figures for same or similar elements. It should also be understood that the terminology used herein is for the purpose of describing embodiments, and the terminology is not intended to be limiting. Unless indicated otherwise, ordinal numbers (e.g., first, second, third, etc.) are used to distinguish or identify different elements or steps in a group of elements or steps, and do not supply a serial or numerical limitation on the elements or steps of the embodiments thereof. For example, "first," "second," and "third" elements or steps need not necessarily appear in that order, and the embodiments thereof need not necessarily be limited to three elements or steps. It should also be understood that, unless indicated otherwise, any labels such as "left," "right," "front," "back," "top," "bottom," "forward," "reverse," "clockwise," "counter clockwise," "up," "down," or other similar terms such as "upper," "lower," "aft," "fore," "vertical," "horizontal," "proximal," "distal," "intermediate" and the like are used for convenience and are not intended to imply, for example, any particular fixed location, orientation, or direction. Instead, such labels are used to reflect, for example, relative location, orientation, or directions. It should also be understood that the singular forms of "a," "an," and "the" include plural references unless the context clearly dictates otherwise.

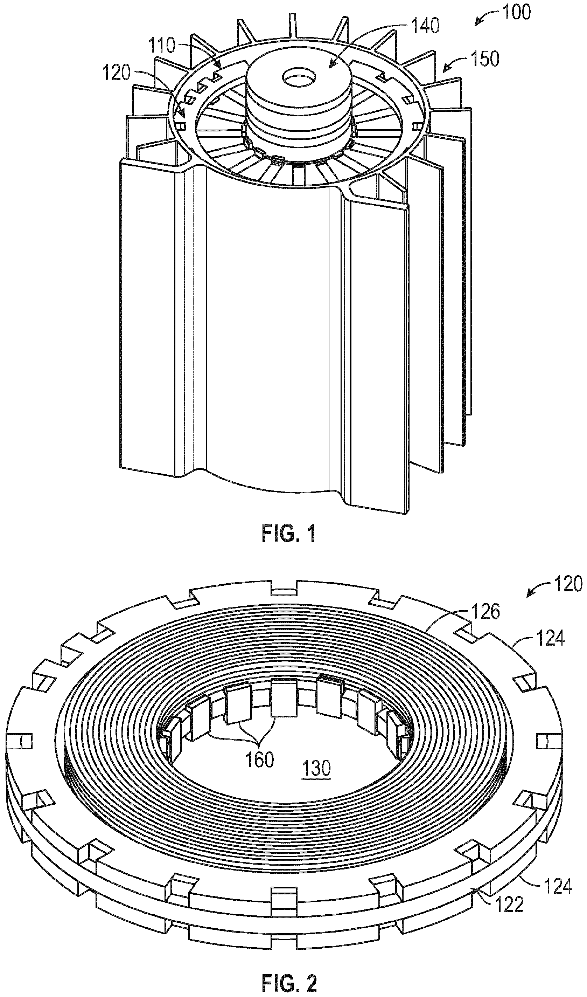

Referring to FIG. 1, a linear electric motor 100 comprises in one embodiment a stator 110 comprising a plurality of stacked stator segments 120, an armature 140, and a housing 150 enclosing the stator 110 and the armature 140. The armature 140 is configured in one embodiment to travel linearly through the stator 110 during operation. In one embodiment, the stator and armature are cylindrical, but it should be understood that other shapes for stator and armature may be employed without departing from the scope of the disclosure. Housing 150 is shown as having heat sink fins, but it should be understood that other types of housing, or no housing at all, may be employed without departing from the scope of the disclosure. For example, a liquid or air cooled housing may be used in various embodiments.

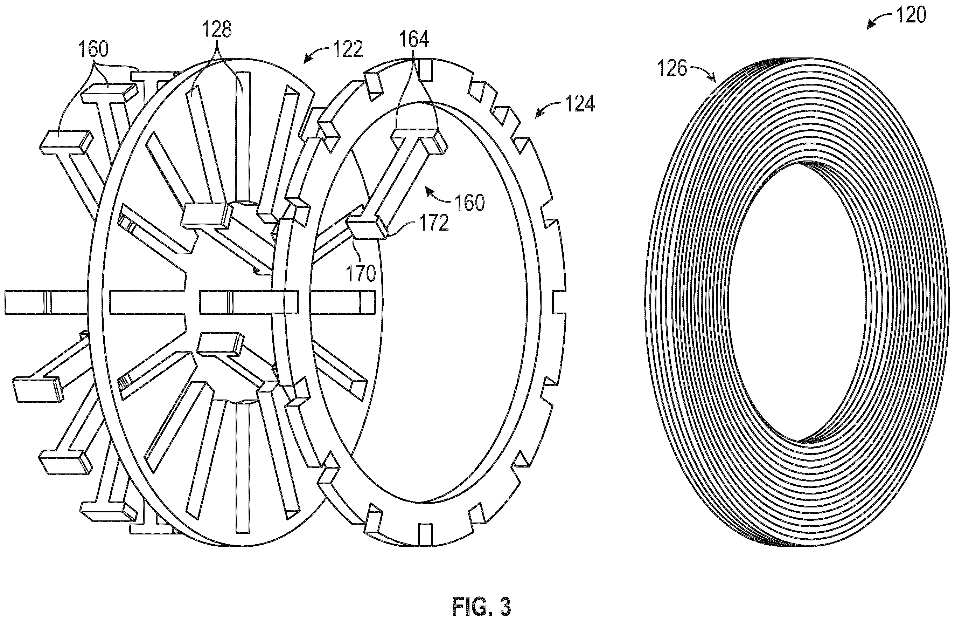

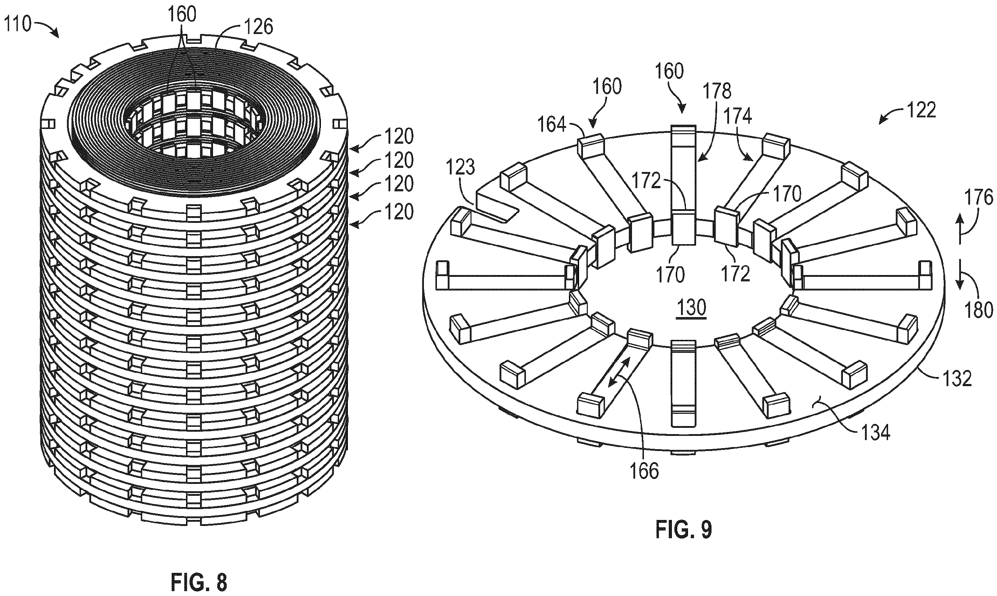

Each stacked stator segment 120, seen also in assembled form in FIG. 2, and in an exploded view in FIG. 3, comprises in one embodiment a stator portion 122, a stator back portion 124 adjacent a face of the stator portion 122, and a conductor 126. In one embodiment, the conductor 126 substantially encircles the armature 140 of the linear electric motor 100. A stator 110 formed from a plurality of stacked stator segments 120 is shown in assembled form in FIG. 8. A stator portion 122 in one embodiment is a solid plate with a center opening. In another embodiment as shown in FIGS. 2-4, a stator portion 122 includes a plurality of stator tooth slots as described below. It should be understood that the conductor 126 need not totally encircle the armature 140 but can be a portion of encirclement, preferably substantially all of the circumference but need not be cully encircling the armature 140.

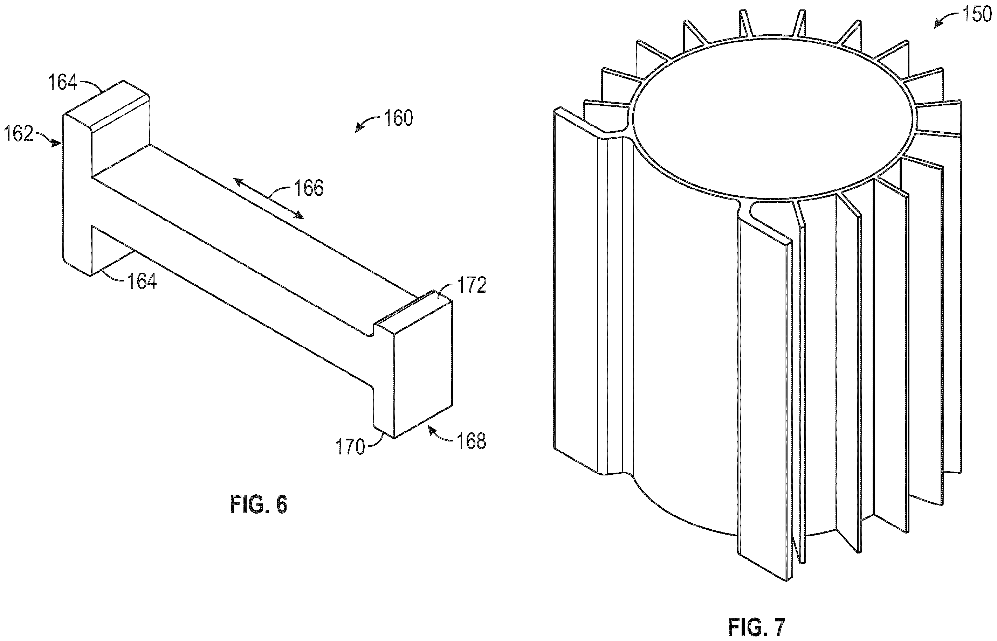

In one embodiment, the linear electric motor 100 further comprises a plurality of stator teeth 160 (described further below in FIG. 6). Each stator portion 122 includes in one embodiment a plurality of stator tooth slots 128 extending from a center opening 130 radially outward toward an outer circumference 132 of the stator portion 122. Each stator tooth 160 is configured to slot into a respective one of the plurality of stator tooth slots 128.

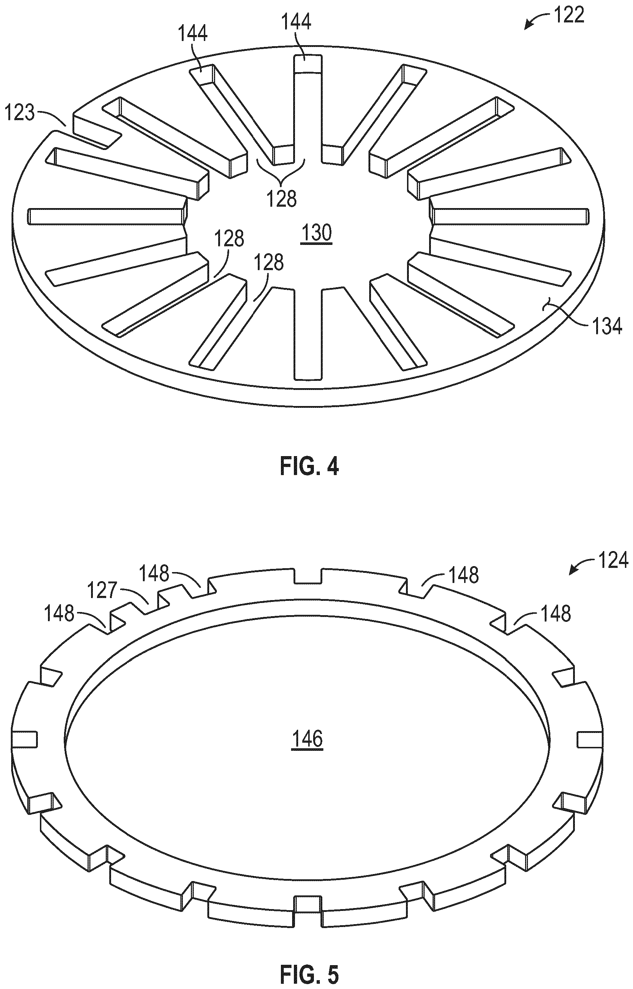

FIG. 4 is a perspective view of a stator portion 122 shown in greater detail. The stator portion 122 is in one embodiment substantially circular in shape, and comprises an inner opening 130 and an outer circumference 132. A plurality of radial slots 128 extend from the inner opening 130 toward the outer circumference 132, and are configured to accept stator teeth 160 as described above. The stator teeth 160 may be inserted in one of two different orientations, as will be discussed further below. An alignment and epoxy channel notch 123 serves in one embodiment as part of a channel when a segmented stator is assembled. The channel allows for introduction of an encapsulation material for sealing a stator/motor.

FIG. 5 is a perspective view of a stator back portion 124 shown in greater detail. Stator back portion 124 is in one embodiment substantially circular in shape and having a smaller circumference than stator portion 122. An alignment and epoxy channel notch 127 serves in one embodiment as part of a channel when a segmented stator is assembled. The notch 127 of back portion 124 aligns with notch 123 of stator portion 122 to form the channel when the stator segment is assembled. The channel allows for introduction of an encapsulation material for sealing a stator/motor.

Once stator teeth 160 are inserted into stator tooth slots 128, the back portion 124 adjacent to and is registered to its stator portion 122 by the engagement of ends 162 of stator teeth 160 with ends 144 of its respective stator tooth slot 128. In one embodiment, as seen in FIG. 2, two back portions 124 are used in a stator segment 120, a back portion 124 adjacent to opposite sides on either side of stator portion 122. In this configuration, the back portions 124 sandwich the stator portion 122 and stator teeth 160 therebetween. Conductor 126 is sized in one embodiment to fit a central opening 146 of back portion 124, and the assembly of stator portion 122, stator teeth 160, two back portions 124, and coil 126, form a stator segment 120. In one embodiment, the stator back portion 124 includes a plurality of stator tooth registration slots 148 that are sized and configured to accept the extensions 164 of stator teeth 160 as described in further detail below. The extensions 164 in one embodiment extend beyond a thickness of the stator portion 122 and this allows for a registered fit of the stator back portion 124 with the stator portion 122 and stator teeth 160. A plurality of stator segments 120 are stacked to form a stator 110 as shown in FIG. 8.

FIG. 6 is a perspective view of an embodiment of a stator tooth 160. In one embodiment, each stator tooth 160 comprises a first end 162 having a pair of symmetric extensions 164 extending substantially perpendicular to a longitudinal axis 166 of the stator tooth 160. The longitudinal axis corresponds to a radial direction of the tooth slot 128 into which it is seated in one embodiment. A second end 168 of stator tooth 160 has a pair of nonsymmetrical extensions 170 and 172, each extension 170 and 172 extending substantially perpendicular to the longitudinal axis 166, in opposite directions to each other. First extension 170 is in one embodiment longer than second extension 172. The end 162 is inserted into the stator tooth slot and extended toward the outer circumference 132 until it seats at end 144 of its respective stator tooth slot 128.

Each stator tooth 160 is orientable in its respective stator tooth slot 128 in one of two positions illustrated as first position 174 and second position 178 as shown in greater detail in FIG. 9. In the first position 174, the first extension 170 extends in a first direction 176 substantially perpendicular to a first face 134 of the stator portion 122, and the second extension 172 extends in a second direction 180 substantially perpendicular to a second face 136 of the stator portion 122, the second face 136 being opposite and parallel to the first face 134. In the second position 178, the second extension 172 extends in the first direction 176 and the first extension 170 extends in the second direction 180.

The stator teeth 160 are in one embodiment arranged in a pattern having an equal number of stator teeth 160 in the first position 174 and in the second position 178. The arrangement of the stator teeth 160 in such a pattern serves to reduce cogging in the linear electric motor 100. The pattern may be any number of patterns including alternating stator tooth positions, as long as the number of stator teeth 160 in each of first positions 174 and 178 is equal. For example, in a stator portion 122 such as shown in FIG. 9, there are 16 stator tooth slots 128. In one embodiment, four stator teeth 160 are arranged in first position 174 in consecutive slots 128, four additional stator teeth 160 are in the next four consecutive stator tooth slots 128 in second position 178. A third set of four stator teeth 160 are in the next four consecutive stator tooth slots 128 in first position 174, and the final four stator tooth slots 128 have stator teeth 160 in second position 178. Other patterns may be used, such as alternating every two stator tooth slots, every eight stator tooth slots, or the like, provided that the number of stator teeth 160 in first position 174 is the same as the number of stator teeth 160 in second position 178. Symmetric arrangements of stator teeth 160 in slots 128 provide better cogging reduction.

FIG. 7 is a perspective view of a representative housing 150 into which the stator 110 and armature 140 may be mounted. Housing 150 is shown as a representative housing only, and it should be understood that different housings may be used without departing from the scope of the disclosure. Such other housings include by way of example only, and not by way of limitation, housings with heat sink fins, liquid or air cooled housings, or the like.

In one embodiment, as shown in FIG. 2, each stacked stator segment 120 includes a stator portion 122, two back portions 124, a back portion 124 on either side of the stator portion 122, and a plurality of stator teeth 160 engaged in radial slots 128 of the stator portion 122. A conductor 126 is arranged in an opening 136 of one of the back portions 124. Conductor 126 may be a wrapped coil or the like. Conductor 126 in one embodiment substantially encircles an armature 140 of the linear electric motor 100. Each stator segment 120 may be assembled along with other stacked stator segments 120 to form a stacked stator 110 such as is shown in FIG. 8. While a back portion 124 on each side of a respective stator portion 122 as shown, it should be understood that a single back portion 124 may be used without departing from the scope of the disclosure.

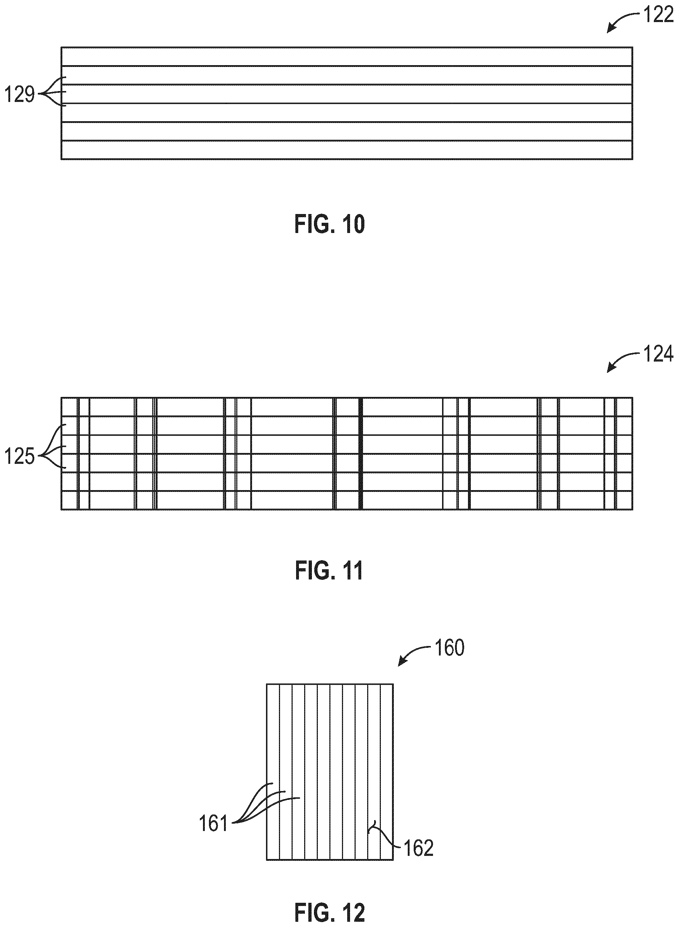

In one embodiment, at least one of the stator portions 122, back portions 124, and stator teeth 160 comprise a plurality of laminations. Laminations 129 for the stator portion 122 are shown in a side elevation of stator portion 122 in FIG. 10. Laminations 125 for the back portions 124 are shown in a side elevation of back portion 124 in FIG. 11. Laminations 161 for stator teeth 160 are shown in and FIG. 12. In one embodiment, the laminations 129 and 125 for the stator portion 122 and back portions 124 are assembled in the same direction. Further, in another embodiment, the laminations 161 of the stator teeth 160 are in a substantially perpendicular direction to the laminations 123 and 125 of the stator portion 122 and back portions 124. Laminations are used in one embodiment to better control Eddy currents as is known in the art.

Use of laminations for one or more of the stator portion 122, back portions 124, stator teeth 160, and armature pieces provides for a lower cost assembly versus machining from, for example, steel ingots.

A stator 110 for a linear electric motor 100 therefore comprises, as is shown in FIG. 9, a plurality of stacked stator segments 120, with each stator segment 120 comprising a stator portion 122, a back portion 124 adjacent a face of the stator portion 122, and a conductor 126 abutting the back portion 124. A second back portion 124 may be positioned adjacent an opposite face of the stator portion 122 without departing from the scope of the disclosure. In one embodiment at least one stator portion 122 comprises a plurality of laminations 129, as shown best in FIG. 10. In one embodiment at least one stator back portion 124 comprises a plurality of laminations 125, as shown best in FIG. 11. A plurality of stator teeth 160 are in one embodiment inserted into a plurality of stator tooth slots 128 to reduce cogging in the movement of an armature 140 such as is described above. At least one stator tooth 160 may comprise a plurality of laminations 161, as shown best in FIG. 12. The laminations 161 of stator teeth 160 are in one embodiment substantially perpendicular to the laminations 129 and 125 of the stator portions 122 and stator back portions 124, respectively.

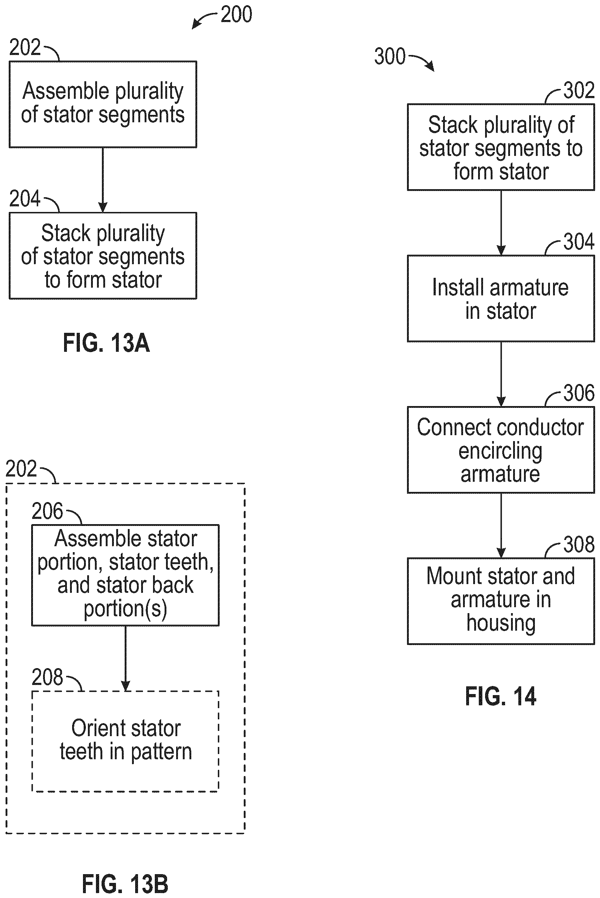

FIG. 13A is a flow chart diagram of a method 200 for assembling a stator for a linear electric motor. Method 200 comprises in one embodiment assembling a plurality of stator segments in block 202, and stacking the plurality of stator segments to create the stator in block 204. Assembly of a stator segment as in block 202 is shown further in FIG. 13B, and may further comprise assembling a stator portion with a plurality of stator tooth slots as described above, and a plurality of stator teeth, each stator tooth inserted into a respective one of the plurality of stator tooth slots in each stator portion, and assembling a back portion or back portions adjacent to the stator portion, and stator teeth in block 206. The method block 202 may further comprise in one embodiment orienting each stator tooth in one of two positions in its respective stator tooth slot as shown in block 208. The first and second positions are described further above.

A method 300 of assembling a linear electric motor is shown in block diagram form in FIG. 14. Method 300 comprises in one embodiment stacking a plurality of stator segments together to form a stator in block 302, and installing an armature in block 304. An armature in one embodiment may comprise a plurality of armature segments stacked together to form the armature. The method 300 further comprises connecting a conductor of each of the plurality of stator segments in block 306, the conductor substantially encircling the armature, and mounting the stator and the armature in a housing in block 308. Stacking a plurality of stator segments together may further comprise stacking a combination of solid and/or laminated stator portions, solid and/or laminated stator back portions, solid and/or laminated stator teeth, solid and/or laminated armature segments, or all or some of the above. Assembling of the linear electric motor may further include known methods including connecting the conductors together, vacuum pressure impregnating the assembly to bond items in place and provide thermal connection for the conductors, insertion of the stator and armature into a housing, attaching end caps, and inserting or bolting the linear electric motor into a load frame or other device.

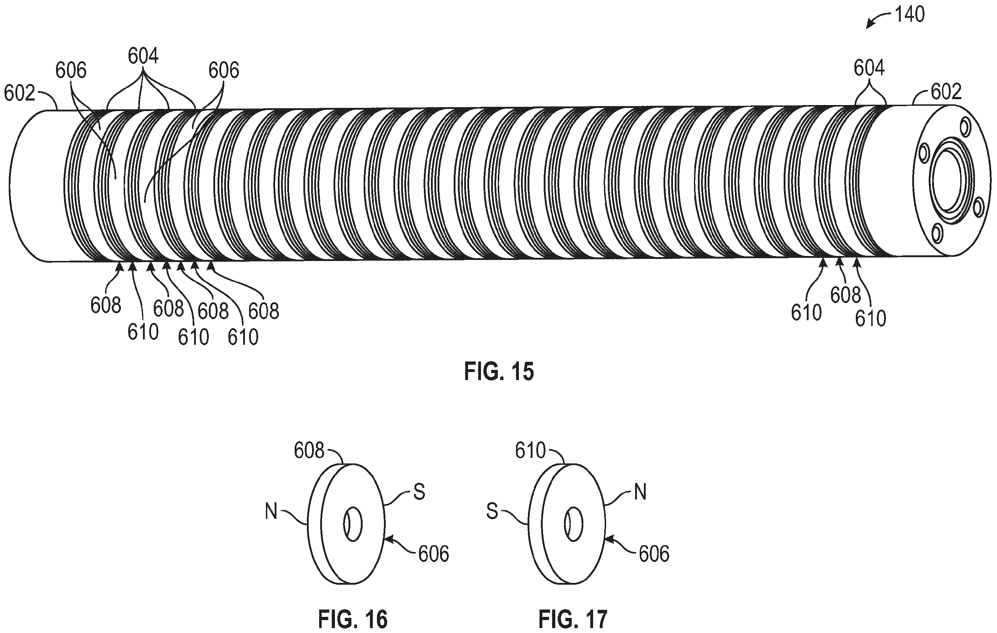

FIG. 15 illustrates an armature 140 in greater detail. Armature 140 comprises in one embodiment a plurality of solid and/or laminated armature segments 604 alternating in a stack with magnets 606, with magnets 606 aligned in one of two positions, 608 and 610, which indicate different orientation of their poles with respect to the laminations as described below, and end caps 602 at either end of the armature 140. In one embodiment, magnets 606 identified at positions 608 are oriented with their south pole at the right and their north pole at the left. Similarly, magnets 606 identified at positions 610 are oriented with their south pole at the left and their north pole at the right. The resulting stack has each segment 604 having a magnetic field associated with south on one side and north on its other side. In other words, each segment 604 is subjected to the same polarity of magnet 606 on either side, left or right. FIGS. 16 and 17 shown magnet positions 608 and 610 respectively, although it should be understood that as long as the magnets have alternating polarity directions, such would be within the scope of the disclosure. Although the armature 140 is shown as cylindrical, it should be understood that the armature shape may be different without departing from the scope of the disclosure.

Embodiments of the present disclosure therefore provide a linear electric motor with stacked stator segments, and provide solid and/or laminated parts. Such a configuration reduces costs for parts and assembly, and is easily scalable by changing a size of the armature and stator segments. Such stacked segments allow for fitting the assembled components into existing frames.

The above-disclosed subject matter is to be considered illustrative, and not restrictive, and the appended claims are intended to cover all such modifications, enhancements, and other embodiments, which fall within the true scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A linear electric motor, comprising:
a stator comprising a plurality of stacked stator segments, wherein at least one of the plurality of stacked stator segment comprises:
a stator portion;
a stator back portion adjacent the stator portion on a first face of the stator portion; and
a conductor; and
an armature configured to travel linearly through the stator during operation, wherein the conductor substantially encircles the armature.

2. The linear electric motor of claim 1, wherein at least one of stator portion or at least one stator back portion comprises a plurality of laminations; and/or the linear electric further comprising a plurality of stator teeth, wherein the stator portion includes a plurality of stator tooth slots extending from a center opening radially toward an outer circumference of the stator portion, and wherein each stator tooth is configured to slot into a respective one of the plurality of stator tooth slot, and in one embodiment, wherein at least one of the plurality of stator teeth comprises a plurality of laminations, and in a further embodiment, wherein each stator tooth comprises a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension.

3. The linear electric motor of claim 2, wherein each stator tooth is orientable in one of two positions in its respective stator tooth slot, a first position in which the first extension extends in a first direction perpendicular to a first face of the stator portion, and a second position in which the first extension extends in a second direction opposite the first direction and perpendicular to a second face of the stator portion opposite and parallel to the first face.

4. The linear electric motor of claim 3, wherein the stator teeth are arranged in a pattern having an equal number of stator teeth in the first position and in the second position.

5. A stator for a linear electric motor comprising:
a plurality of stacked stator segments, each stator segment comprising:
a stator portion;
a back portion adjacent to a first face of the stator portion; and
a conductor adjacent to the back portion.

6. The stator of claim 5, wherein at least one stator portion or at least one stator back portion comprises a plurality of laminations; and/or
wherein at least one stator segment further comprises a plurality of stator teeth, wherein in one embodiment, wherein at least one of the plurality of stator teeth comprises a plurality of laminations; and/or
wherein the at least one stator portion includes a plurality of stator tooth slots extending from a center opening radially toward an outer circumference of the stator portion, and wherein each stator tooth is configured to slot into a respective one of the plurality of stator tooth slots.

7. The stator of claim 6, wherein each stator tooth comprises a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension, and in one embodiment, wherein each stator tooth is orientable in one of two positions in its respective stator tooth slot, a first position in which the first extension extends in a first direction perpendicular to the first face of the stator portion, and a second position in which the first extension extends in a second direction opposite the first direction and perpendicular to a second face of the stator portion opposite and parallel to the first face, and in a further embodiment, wherein the stator portion comprises at least two slots, and the stator teeth are arranged in a pattern having an equal number of stator teeth in the first position and in the second position.

8. The stator of claim 5, wherein at least one stacked stator segment further comprises a second back portion adjacent a second face of the stator portion; and/or wherein the back portion includes an aperture of size to receive an armature.

9. A method of assembling a stator for a linear electric motor, comprising:
assembling a plurality of stator segments, each stator segment comprising a stator portion, a back portion adjacent a first face of the stator portion, and a conductor; and
stacking the plurality of stator segments to create the stator.

10. The method of claim 9, wherein assembling further comprises inserting a plurality of stator teeth into a plurality of stator tooth slots in at least one stator portion, the stator tooth slots extending from a center opening of the stator portion radially toward an outer circumference of the stator portion, wherein each stator tooth is configured to slot into a respective one of the plurality of stator tooth slots, and wherein each stator tooth comprises a first end having a pair of symmetric extensions substantially perpendicular to a longitudinal axis of the stator tooth along its respective stator tooth slot, and a second end having a pair of non-symmetrical extensions substantially perpendicular to the longitudinal axis, a first extension longer than a second extension.

11. The method of claim 10, and further comprising orienting each stator tooth in one of two positions in its respective stator tooth slot, a first position in which the first extension extends in a first direction perpendicular to the first face of the stator portion, and a second position in which the first extension extends in a second direction opposite the first direction and perpendicular to a second face of the stator portion opposite and parallel to the first face.

12. The method of claim 11, wherein inserting the stator teeth comprises arranging the inserted stator teeth in a pattern having an equal number of stator teeth in the first position and in the second position.

13. A method of assembling a linear electric motor, comprising:
stacking a plurality of stator segments together to form a stator, each stator segment comprising a stator portion, a back portion adjacent a first face of the stator portion, and a conductor;
stacking a plurality of armature segments together to form an armature, wherein the conductor substantially encircles the armature; and
connecting windings of the conductors of each of the plurality of stator segments.

14. The method of claim 13, wherein stacking a plurality of stator segments together further comprises stacking laminated stator portions.
